Europäisches Patentamt

European Patent Office

Office européen des brevets

(11) Publication number: **0 030 049**

A1

# (12) EUROPEAN PATENT APPLICATION

(21) Application number: **80201068.6**

(22) Date of filing: **10.11.80**

(51) Int. Cl.3: **G 05 D 11/03**
**F 16 K 11/16**
**//F23N1/02**

(30) Priority: **03.12.79 FR 7929665**

(43) Date of publication of application:
**10.06.81 Bulletin 81/23**

(84) Designated Contracting States:
**BE CH DE GB IT LI NL**

(71) Applicant: SHELL INTERNATIONALE RESEARCH
MAATSCHAPPIJ B.V.
Carel van Bylandtlaan 30
NL-2596 HR DEN HAAG(NL)

(72) Inventor: Lorek, Georges
14, rue des Mésanges
Saint Aubin les Elboeuf F-76410 Cleon(FR)

(72) Inventor: Blondet, Joel
La Coquinerie Route de Mauny Barneville sur Seine
F-27310 Bourg-Achard(FR)

(74) Representative: Keuzenkamp, Abraham et al,
P.O. Box 302
NL-2501 CH Den Haag(NL)

(54) **A device for distributing two fluids in a constant ratio and regulating the flow of the fluids.**

(57) The present invention relates to a device for distributing two fluids in a constant ratio and regulating the flow of the fluids.

The device comprises a gate valve (10,20) located between a supply line and a discharge line of one of the fluids; a secondary valve (12) located between a supply line and discharge line of the other fluid, said secondary valve comprising an internal tube (42) provided with at least one lateral orifice (44) enabling the other fluid to enter the tube and leave it through its orifice(s), and a closing element (60) controlled by the displacement of gate (20) of the gate valve to uncover the orifice(s) of the tube to a greater or lesser extend, the passage sections for the two fluids being so varied that the flow ratio of the two fluids is constant.

Preferred application: distribution of gaseous fuel and a gaseous comburent for feeding burners.

FIG. 2

EP 0 030 049 A1

# A DEVICE FOR DISTRIBUTING TWO FLUIDS IN A CONSTANT
## RATIO AND REGULATING THE FLOW OF THE FLUIDS

The present invention relates to a device for distributing two fluids in a constant ratio and regulating the flow of the fluids.

The invention relates in particular to such a device, designed to be mounted downstream of two lines serving to supply two fluids respectively and upstream of two lines serving to discharge said two fluids respectively in order to distribute said two fluids separately in a constant ratio and regulate the flow of the fluids.

Devices for mixing two fluids in a constant ratio and regulating the total flow of the fluids are already known in the art. A device of said type, for example, is described in the British patent application No. 40,720/78, filed on 16th October, 1978, in the name of Applicant, and laid open to public consultation on 2nd May, 1979.

In the prior art device the two fluids are discharged together as a mixture, which may present some drawbacks in the event of the mixture consisting of two gaseous fluids, a fuel gas and a comburent gas, in so far as the joint discharge line is of great length.

Consequently, the object of the present invention is to provide a device for distributing two fluids in a constant ratio and regulating the flow of the fluids, in which device the two fluids are discharged independently into two separate discharge lines.

More particularly, the present invention relates to a device as hereinbefore defined, characterized in that it comprises a gate valve located between a supply line and a discharge line of one of the fluids; and a secondary valve located between a supply line and a discharge line of the other fluid, said secondary valve comprising an internal tube provided with at least one lateral orifice enabling the other fluid to enter the tube and leave it through its orifice(s), and a closing element controlled by the displacement of the gate valve to uncover the orifice(s) of the tube to a greater or lesser extent, the passage sections for the two fluids being so varied that the flow ratio of the two fluids is constant, whatever the position of the gate.

According to another feature of the invention, the size of the orifice of the tube or the size and the spacing of each of the orifices of the tube is/are so chosen that the total surface area of the orifice(s) uncovered by the closing element and the surface area of the passage section uncovered by the gate are varied in such a manner that the flow ratio of the two fluids is constant, whatever the position of the gate.

According to still another feature of the invention the secondary valve has a body that is externally fitted to the body of the gate valve.

In a preferred embodiment of the invention, the body of the secondary valve has a generally cylindrical part, the axis of which coincides with the axis of displacement of the gate, as well as an inlet port and an outlet port that open into the cylindrical part at different levels and can be connected to the supply line and the discharge line of the other fluid respectively.

The tube is advantageously so arranged inside said cylindrical part that it has an open end that is connected in a fluid-tight manner to the inlet port and its orifice(s) is/are connected in a fluid-tight manner to the outlet port, the closing element consisting of a piston sliding in a fluid-tight manner in the other end of the tube.

The device according to the invention can be used for any type of fluid, which may be combustible or non-combustible, gaseous, liquid or even a fluidized solid.

It can be used with particular advantage for the distribution of two gaseous fluids, for example a gaseous fuel such as natural gas or liquefied gas, and a gaseous comburent such as air and oxygen. In such an application the device according to the invention can be located upstream of a burner, the correct operation of which depends on the ratio between fuel and comburent being kept between well-defined limits.

In this mode of application the device according to the invention enables the ratio of fuel and comburent supplied to one or more burners to be kept constant from the totally closed position of the gate valve until its fully open position corresponding with the permissible maximum flow of the mixture.

In this application the device according to the invention enables one or more burners to be fed with fuel and comburent, said feed being controllable over the full operating range by means of a single element, namely the control for displacing the gate.

Other features and advantages of the invention will be more readily understood with reference to the drawing showing a preferred embodiment of the invention, given by way of non-limitative example and in which:

Figure 1 is a perspective view of a device according to the invention; and

Figure 2 is a partial section along the line II-II of figure 1, the secondary valve being rotated a quarter turn in relation to the gate valve.

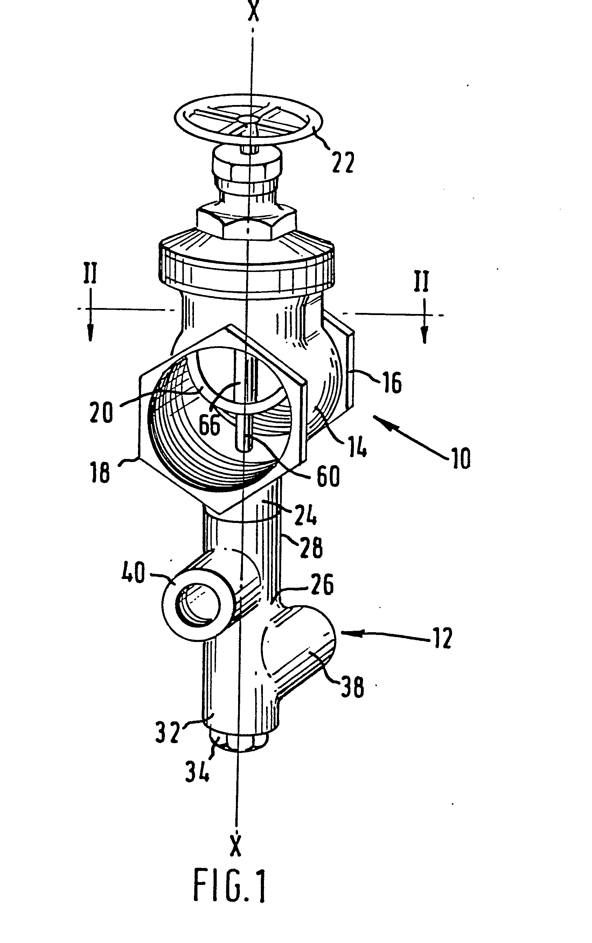

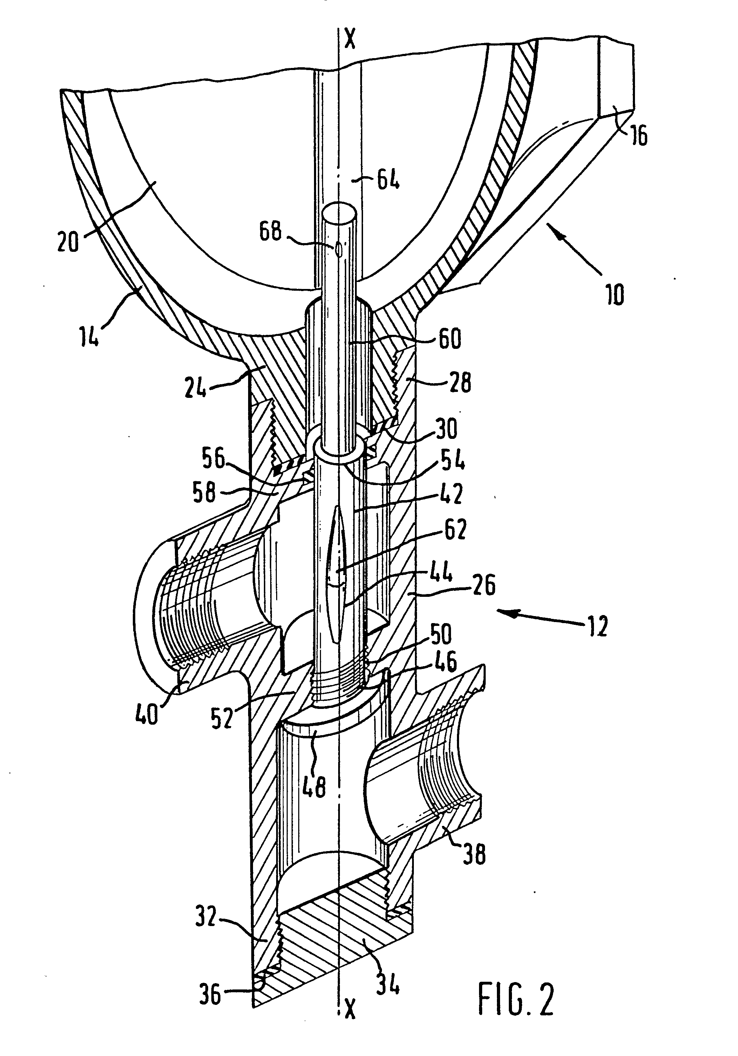

Figures 1 and 2 show a device according to the invention comprising a gate valve 10 and a secondary valve 12 that is integral with the gate valve 10.

4

Valve 10 is a gate valve of a type known as such, modified by the addition of a valve 12 in accordance to the invention. Valve 10 has a body 14 provided with two opposite ports, namely port 16 that can be connected to a supply line for a first fluid, for example a gaseous comburent, and port 18 that can be connected to a discharge line of said fluid. The gate valve moreover has a gate 20 that can be displaced along an axis XX inside body 14 of the valve and perpendicularly to the direction formed by the ports 16 and 18 with the aid of a screwed stem (not shown) rotated by means of a handwheel 22. The screwed stem co-operates with a threaded part provided in the centre of gate 20.

The lower end of gate 20 has the shape of part of a circle, so that the section of the opening uncovered by gate 20 inside body 14 of valve 10 exhibits the successive shapes of the moon during an eclipse. Valve 10 is provided with a threaded joint 24 welded to the lower part of body 14 on the axis of displacement XX of gate 20. The joint 24 is hollow on the inside in order to enable gate 20 to be functionally connected to the closing element of secondary valve 12, as explained below.

The body of secondary valve 12 has a generally cylindrical hollow part 26 that is so designed that it can be located on the axis of displacement XX of the gate. The cylindrical part is provided with an internally threaded end 28 that can be screwed on the joint 24 with an interposed fluid-tight ring 30 and an internally threaded end 32 to receive a screwed plug 34 with an interposed fluid-tight ring 36.

The body of the secondary valve 12 also has an inlet port 38 and an outlet port 40 that are made integral with cylindrical part 26 and are located at different levels thereof.

In the embodiment shown in figure 1 the two ports of the secondary valve have parallel axes which are also parallel with the direction indicated by the two ports of the gate valve. On figure 2 the axes of the secondary valve ports are at right angles to those of the gate valve ports. Port 38 opens into the cylindrical part 26 near its end 32 and port 40 opens into the cylindrical part 26 near its end 28, so that outlet port 40 is closer to gate valve 10 than inlet port 38.

The body of secondary valve 12 is internally provided with a tube 42 provided with an orifice 44 on its periphery shaped as an oblong slit running along a generatrix of the tube, preferably opposite port 40. The tube 42 has a lower end provided with external thread 46 and a flange 48, thread 46 being designed to engage thread 50 provided in a bridging part 52 which is integral with cylindrical part 26. Tube 42 moreover has a top end 54 that can co-operate in a fluid-tight manner with a fluid-tight O-ring 56 placed in the groove of a bridging part 58 that is integral with cylindrical part 26.

The lower open end of tube 42 is thus connected in a fluid-tight manner to inlet port 38 and its orifice 44 is connected in a fluid-tight manner to outlet port 40. Port 38 and port 40 are intended to be respectively connected to a supply line of another fluid and to a discharge line of said fluid, in such a manner that the fluid flows through tube 42 and leaves it through orifice 44, the opening of which can be varied to a greater or lesser extent by means of a closing element which is displaced in relation to gate 20.

Said closing element consists of a piston 60 of which the lower end 62 slides in a fluid-tight manner in tube 42, the upper end being inserted into a bore 64 made in gate 20 along axis XX. Piston 60 is made integral with gate 20 by means of a pin 66 inserted into a hole of gate 20 and a corresponding hole 68 of piston 60.

The movement of piston 60, which is integral with the movement of gate 20, causes the passage section of orifice 44 to vary in relation to gate 20 in accordance with the desired rule of variation.

6

In order to maintain a constant ratio between the fluid the flow of which is regulated by valve 10 and the fluid the flow of which is regulated by valve 12, it is sufficient that the shape of orifice 44 is so designed that the passage section provided by gate 20 inside valve 10 and the passage section provided by orifice 44 inside valve 12 are varied in such a manner that the flow ratio of the two fluids is constant, whatever the position of gate 20 and, consequently, whatever the position of the closing element (piston 60).

The invention is of course not limited to the particular embodiment described and shown on the drawings, other alternatives being possible without exceeding the scope of the invention.

Consequently, although the tube shown on the drawings has only one orifice, it is obvious that it can be provided with several orifices, the size and spacing of which will be adapted to the desired mode of application.

Moreover, although the invention is described with special reference to the distribution of a gaseous fuel and a gaseous comburent intended as feed for burners, it is obvious that it can be used for all types of fluids that have to be distributed in a constant ratio with simultaneous regulation of the flow of the two fluids.

It will be further understood that it is possible to operate several devices according to the invention simultaneously and automatically by replacing the handwheels thereof by gearwheels driven by a common chain and a servomotor or by individual servomotors fitted on the bodies of the valves by suitable means.

7

## C L A I M S

1. A device for distributing two fluids in a constant ratio and regulating the flow of said fluids, characterized in that it comprises a gate valve (10, 20) located between a supply line and a discharge line of one of the fluids; and a secondary valve (12) located between a supply line and a discharge line of the other fluid, said secondary valve comprising an internal tube (42) provided with at least one lateral orifice (44) enabling the other fluid to enter the tube and leave it through its orifice(s) and a closing element (60) controlled by the displacement of gate (20) of the gate valve to uncover the orifice(s) of the tube to a greater or lesser extent, the passage sections for the two fluids being so varied that the flow ratio of the two fluids is constant, whatever the position of the gate.

2. A device as claimed in claim 1, characterized in that the size of orifice 44 of tube 42 or the size and spacing of each of the orifices of the tube is/are so chosen that the total surface area of the orifice(s) uncovered by closing element (60) and the surface area of the passage section uncovered by gate (20) are varied in such a manner that the flow ratio of the two fluids is constant, whatever the position of the gate.

3. A device as claimed in claim 1, characterized in that the secondary valve (12) has a body that is externally fitted to the body (14) of gate valve (10).

4. A device as claimed in claim 3, characterized in that the body of the secondary valve has a generally cylindrical part (26) the axis of which coincides with the axis of displacement (XX) of the gate, as well as an inlet port (38) and an outlet port (40) that open into the cylindrical part at different levels and can be connected to the supply line and the discharge line of the other fluid respectively.

8

5. A device as claimed in claim 4, characterized in that tube (42) is so located inside said cylindrical part that it has an open end that is connected in a fluid-tight manner to the inlet port (38) and its orifice or orifices (44) is/are connected in a fluid-tight manner to outlet port (40), the closing element consisting of a piston (60) sliding in a fluid-tight manner in the other end (54) of the tube.

FIG.1

FIG. 2

0030049

European Patent
Office

EUROPEAN SEARCH REPORT

Application number

EP 80 20 1068

| Category | Citation of document with indication, where appropriate, of relevant passages | Relevant to claim |
|---|---|---|
| | GB - A - 520 334 (THE DUDLEY, BRIERLEY HILL AND DISTRICT GAS COMPANY)<br><br>* Page 1, lines 21-47; page 3, line 20 - page 4, line 68, figure *<br><br>-- | 1-5 |
| | FR - A - 979 499 (J.A. HARDY)<br><br>* Page 1, left-hand column, lines 1-7; page 2, right-hand column, line 47 - page 3, left-hand column, line 18; page 3, right-hand column, line 57 - page 4, left-hand column, line 49; figures 1,2 *<br><br>-- | 1,2,4 |
| | GB - A - 1 033 147 (CHEMETRON CORP.)<br><br>* Title; page 2, line 3 - page 3, line 115; figures 1,2,3, 4,5 *<br><br>-- | 1,2,4 |
| | GB - A - 1 223 158 (ROLLS-ROYCE)<br><br>* Page 1, line 10 - page 2, line 68; page 3, lines 8-46; figure *<br><br>-- | 1 |
| | US - A - 2 132 030 (N.C. HUNT et al.)<br><br>* Page 3, lines 25-67; figure 4 *<br><br>-- | 4 |
| | ./. | |

## DOCUMENTS CONSIDERED TO BE RELEVANT

**CLASSIFICATION OF THE APPLICATION (Int. Cl.³)**

G 05 D 11/03
F 16 K 11/16//
F 23 N 1/02

**TECHNICAL FIELDS SEARCHED (Int. Cl.³)**

G 05 D 11/03
       11/00
F 16 K 11/16
       3/32
F 23 N 1/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X

The present search report has been drawn up for all claims

| Place of search | Date of completion of the search | Examiner |
|---|---|---|
| The Hague | 09-02-1981 | POINT |

EPO Form 1503.1  06.78

0030049

European Patent
Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| A | GB - A - 580 421 (J.S. LOWE) <br> * Page 1, line 50 - page 2, line 36; figures 1,2 * <br><br> ---- | 1 |

CLASSIFICATION OF THE APPLICATION (Int. Cl. 3)

TECHNICAL FIELDS SEARCHED (Int. Cl. 3)